# DEMANDE DE BREVET EUROPEEN

(11) **EP 2 692 225 A1**
(43) Date de publication de la demande: **05.02.2014**
(21) Numéro de dépôt: 13178774.9
(22) Date de dépôt: 31.07.2013
(51) Int. Cl.: A01G 9/02

(54) **Structure de mur végétalisé et mur végétalisé comportant cette structure**

(30) Priorité: 31.07.2012 FR 1257447
(71) Demandeur: Canevaflor, 69170 Tarare (FR)
(72) Inventeur: Peleszezak, Pascal, 69170 Tarare (FR)
(74) Mandataire: Chevalier, Renaud Philippe

(57) **Abrégé**

Cette structure modulaire, composée d'éléments grillagés, comprend des éléments de support (2) de profil en « L », juxtaposables et superposables, et des éléments de fermeture plans (3) disposés verticalement, ainsi que des consoles (13) reliant et fixant ces éléments. Les faces inférieures horizontales (5) des éléments de support (2) superposés délimitent des volumes recevant un substrat de plantation qui se présente avantageusement sous la forme de cartouches pré-remplies, amenées avant mise en place des éléments de fermeture (3).

## Description

La présente invention concerne une structure de mur végétalisé. Elle a aussi pour objet un mur végétalisé qui comporte une telle structure.

On connait des structures de murs végétalisés qui sont composées de casiers de forme générale prismatique, pouvant être juxtaposés et/ou superposés. Chaque casier d'une telle structure possède un châssis, qui supporte des faces grillagées ou maillées. Les casiers sont remplis d'un substrat de plantation tel que terreau qui, en cas de configuration ajourée des faces par lesquelles ces casiers sont rendus adjacents, peut s'étendre sans discontinuité à l'intérieur de la structure.

A titre d'exemple d'une telle structure de mur végétalisé, on peut citer le brevet européen EP 1 771 062 B1 au nom du Demandeur, dans lequel les casiers adjacents sont assemblés entre eux au moyen de vis, qui relient de façon démontable leurs châssis respectifs. Ces casiers peuvent comporter chacun une face avant amovible, sous forme de cadre grillagé ou maillé fixé au châssis de manière démontable au moyen d'autres vis.

Une telle structure du mur végétalisé a pour avantage son caractère modulaire, facilitant son transport et son installation tout en autorisant une adaptation à chaque cas d'application. Elle constitue en particulier une structure autoporteuse, ne nécessitant pas d'être fixée à un mur de support. De plus, elle peut être aisément équipée d'un réseau interne d'irrigation, qui peut traverser les plans de joint entre casiers dans la mesure où les faces latérales de casiers adjacents sont des faces grillagées ou autrement ajourées.

Une telle structure reste toutefois assez lourde et encombrante pour son transport, dans la mesure où les casiers représentent même individuellement des volumes et poids non négligeables. De plus, elle nécessite, pour sa fabrication et pour son installation, des opérations de soudage et de vissage qui compliquent sa pour mise en oeuvre et mobilisent de la main-d'oeuvre, les temps de fabrication et de pose sur le site d'installation étant encore relativement importants. La mise en place du réseau d'irrigation reste, elle aussi, assez délicate.

La présente invention vise à fournir une structure de mur végétalisé qui soit légère, peu encombrante et facile à transporter et à installer, ne nécessitant en particulier ni soudage ni vissage, tout en permettant la mise en place aisée d'un système d'irrigation.

A cet effet, l'invention a pour objet une structure de mur végétalisé, composée d'éléments modulaires grillagés, assemblés entre eux en formant des rangées horizontales et/ou des empilements verticaux, tout en délimitant des volumes prévus pour contenir un substrat de plantation, cette structure étant essentiellement caractérisée par le fait qu'elle comprend, en combinaison :
- des éléments grillagés de support de profil en « L », avec une face arrière verticale et une face inférieure horizontale, ces éléments de support étant juxtaposables et superposables de telle sorte que la face inférieure horizontale d'un élément forme la base d'un volume apte à recevoir un substrat de plantation et simultanément le sommet d'un volume immédiatement inférieur également apte à recevoir un substrat de plantation,
- des éléments grillagés de fermeture de forme plane, également juxtaposables et superposables, prévus pour être disposés verticalement devant le substrat de plantation, en reliant les bords avant des faces inférieures horizontales respectives des éléments de support de profil en « L » superposés, et
- des moyens de liaison entre éléments de support de profil en
   « L », juxtaposés et/ou superposés, ainsi qu'entre les bords avant des faces inférieures horizontales de ces éléments de support de profil en « L » et les bords supérieurs et inférieurs des éléments grillagés verticaux de fermeture.

Ainsi, le concept de la présente invention consiste à former des volumes, aptes à recevoir le substrat de plantation, par la simple association d'éléments grillagés de support ayant un profil en « L » et d'éléments grillagés plans de fermeture, moyennant l'utilisation de moyens d'assemblage qui conservent eux aussi une constitution simple.

Une telle structure reste légère et peu encombrante, que ce soit pour son stockage ou son transport. Ainsi, les éléments de support de profil en « L » sont facilement emboîtables les uns dans les autres, tandis que les éléments de fermeture plans n'occupent qu'un volume minimum.

Ces éléments de support et de fermeture peuvent se présenter eux-mêmes comme de simples grillages, à mailles carrées régulières, réalisables notamment en fils métalliques ou en matière plastique. Toutefois, la face inférieure horizontale de chaque élément de support de profil en « L » comporte avantageusement deux fils parallèles longitudinaux relativement rapprochés, situés sensiblement à mi-largeur de cette face, de manière à servir de support et de guide à un tuyau d'irrigation du substrat de plantation. La mise en place du réseau d'irrigation se trouve ainsi facilitée, et son positionnement correct est garanti.

La face inférieure horizontale de chaque élément de support de profil en « L » peut résulter du pliage de fils constitutifs de la face arrière verticale de cet élément de support, ce qui contribue à la simplicité de fabrication en évitant tout assemblage par soudure entre la face horizontale et la face verticale dudit élément.

Les moyens de liaison, reliant les éléments grillagés de support de profil en « L » entre eux et aux éléments grillagés de fermeture, sont avantageusement constitués par des consoles de fixation transversales, chaque console présentant :
- une partie principale horizontale, recevant une platine de serrage apte à pincer au moins un fil longitudinal de la face inférieure horizontale d'un élément de support et un fil longitudinal du sommet de la face arrière verticale de l'élément de support immédiatement inférieur,
- une partie antérieure repliée vers le haut et munie d'un moyen de retenue de la base d'un élément de fermeture et du sommet de l'élément de fermeture immédiatement inférieur, et
- une partie postérieure repliée vers le haut ou vers le bas et prévue pour être fixée à un mur ou à une paroi de support.

Outre leur fonction de fixation, de telles consoles ont pour avantage de permettre un réglage aisé de la position relative longitudinale des éléments de support et des éléments de fermeture, pour une adaptation dimensionnelle de la structure aux conditions imposées par le lieu d'installation du mur végétalisé.

Bien entendu, lors des opérations d'installation d'une telle structure, le substrat de plantation doit être amené à l'intérieur des volumes délimités par les éléments de support de profil en « L », avant la mise en place des éléments de fermeture verticaux à l'avant des éléments de support.

La mise en place du substrat de plantation est facilitée en prévoyant des cartouches pré-remplies de substrat de plantation, amenées dans les volumes formés entre les faces inférieures horizontales respectives des éléments de support de profil en « L » superposés, avant mise en place des éléments de fermeture verticaux.

Chaque cartouche possède au moins une face inférieure, une face supérieure et deux faces latérales, délimitant un volume parallélépipédique rempli du substrat de plantation. La cartouche peut être constituée et remplie de substrat de plantation dans une usine ou un atelier spécialisé, puis être transportée vers le lieu d'installation du mur végétalisé pour être directement posée. Cette cartouche peut aussi être constituée et remplie seulement sur le lieu d'installation du mur végétal, ce qui autorise son transport à l'état démonté ou replié donc sous un encombrement minimum.

La face avant de chaque cartouche peut posséder un habillage sous forme de panneau ou coque, comportant des ouvertures pré-percées pour la plantation et le développement des végétaux, tel que décrit dans la demande de brevet français FR 2 962 881 A1 au nom du Demandeur.

On notera aussi que ce concept de cartouche pré-remplie permet de supprimer toute toile ou natte habituellement utilisée pour retenir le substrat de plantation.

Grâce à ses propres particularités constructives, et à la rationalisation procurée par l'utilisation des cartouches pré-remplies de substrat de plantation, la structure objet de l'invention permet de diviser sensiblement par deux le temps total d'installation d'un mur végétalisé. En particulier, les cartouches pré-remplies évitent les opérations manuelles fastidieuses de remplissage en substrat de plantation.

L'invention porte aussi sur un mur végétalisé qui comporte une telle structure, ce mur végétalisé se composant donc essentiellement :
- d'une structure avec éléments grillagés de support de profil en
   « L » et d'éléments grillagés de fermeture verticaux comme défini plus haut, et
- de cartouches pré-remplies d'un substrat de plantation, reçues dans les volumes formés entre les faces inférieures horizontales respectives des éléments de support de profil en « L » superposés, avant mise en place des éléments de fermeture verticaux.

Les éléments de fermeture verticaux d'un tel mur végétalisé peuvent servir de support à des coques disposées du côté intérieur ou du côté extérieur de ces éléments, les coques extérieures pouvant être montées pivotants sur ledit support.

De toute façon, l'invention sera mieux comprise à l'aide de la description qui suit, en référence au dessin schématique annexé représentant, à titre d'exemples, quelques formes d'exécution de cette structure de mur végétalisé.
Figure 1 est une vue d'ensemble en perspective d'une structure de mur végétalisé conforme à la présente invention ;
Figure 2 est une vue de détail en perspective de cette structure ;
Figure 3 est une vue similaire à la figure 2, avec indication d'un tuyau d'irrigation ;
Figure 4 est une autre vue de détail en perspective de la même structure ;
Figure 5 est une vue en perspective d'une cartouche pré-remplie de substrat de plantation, située en face d'un élément de la structure ;

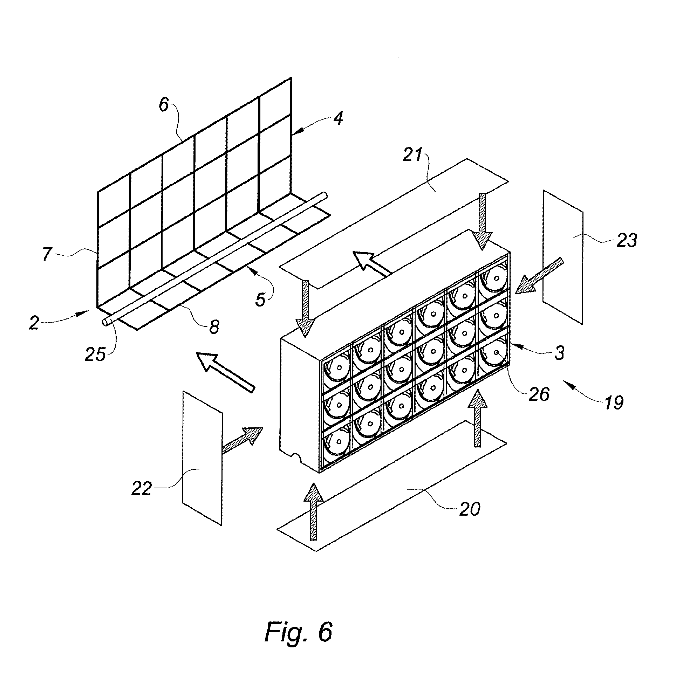

Figure 6 est une vue en perspective éclatée de la cartouche ;

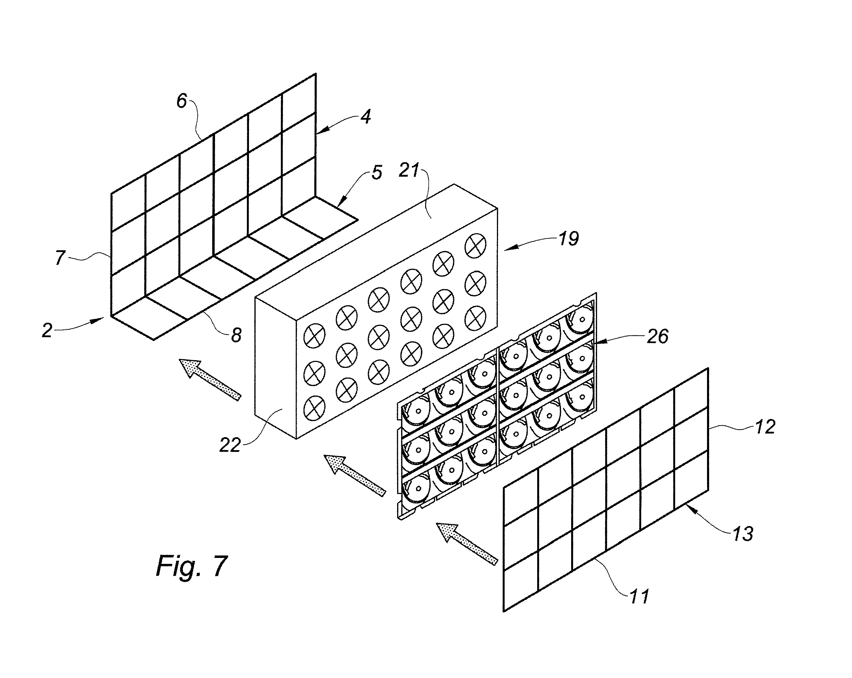

Figure 7 est une autre vue en perspective éclatée de la cartouche ;

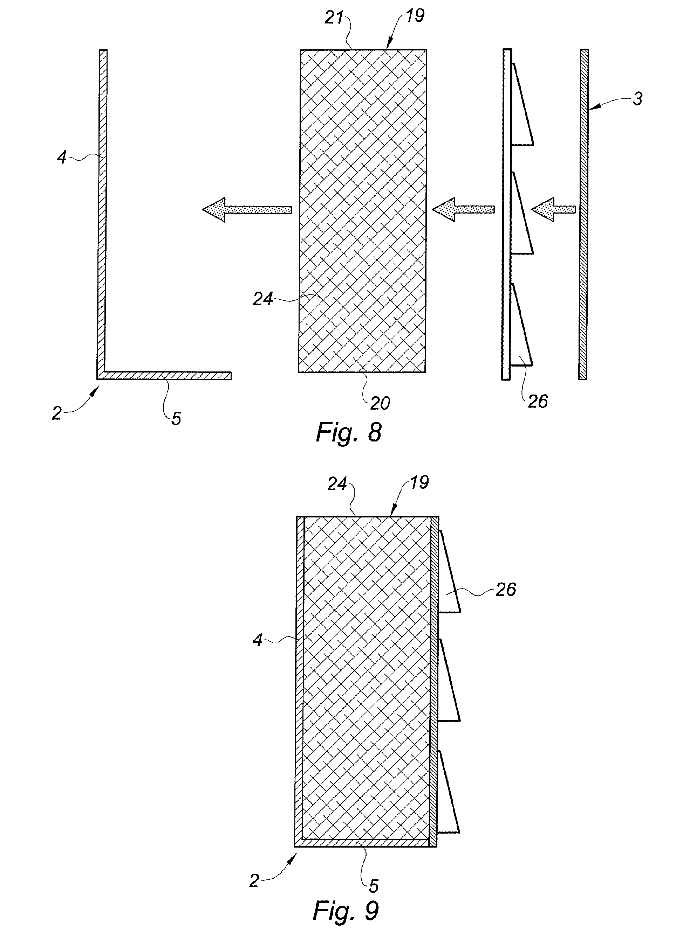

Figures 8 et 9 sont des vues de côté de la cartouche, avant et après mise en place sur un élément de la structure ;
Figure 10 est une vue en perspective éclatée illustrant une variante de l'invention ;
Figure 11 est une vue de côté, en correspondance avec la figure 10.

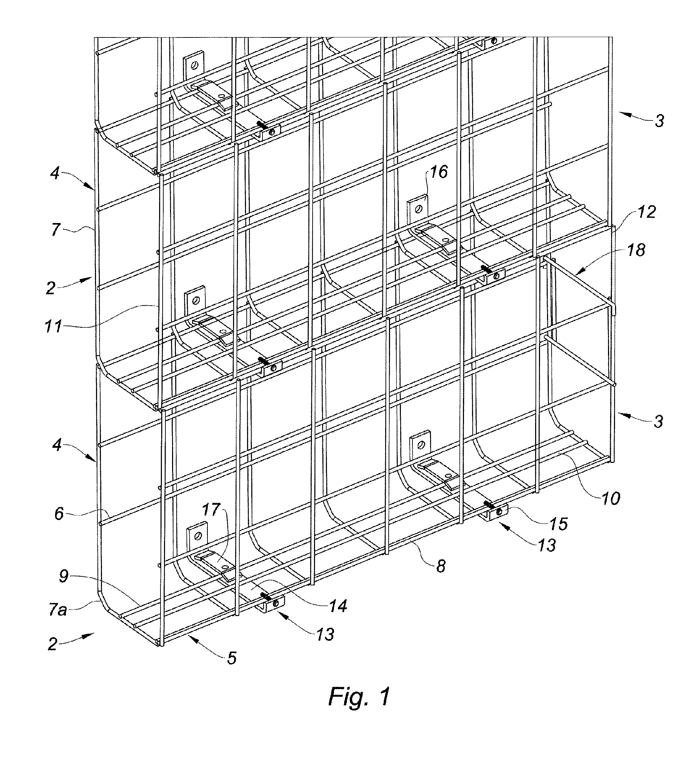

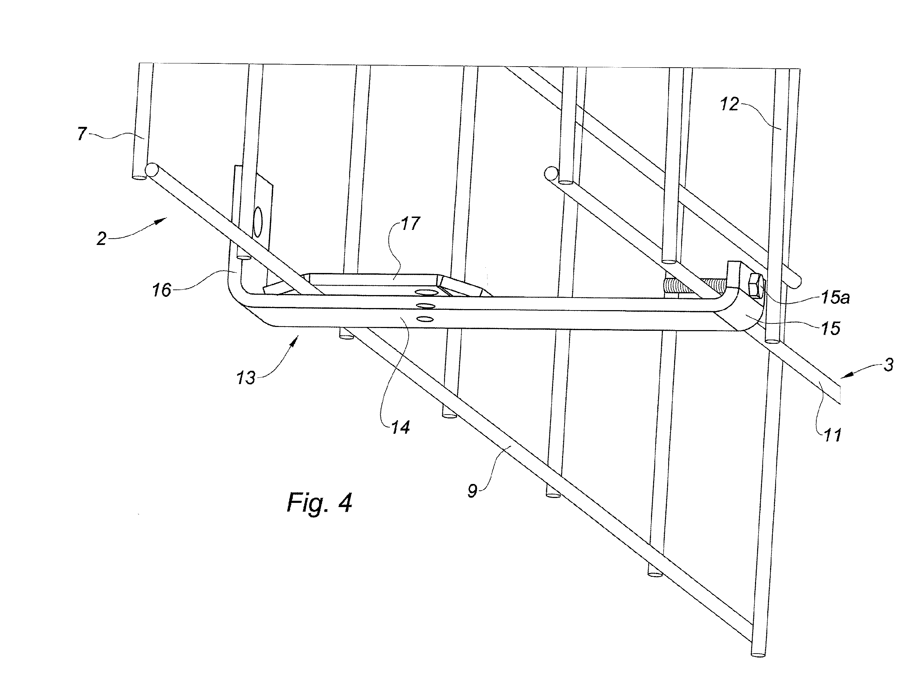

La structure de mur végétalisé, représentée en particulier sur les figures 1 à 4, comprend des éléments grillagés de deux types, respectivement désignés par les repères 2 et 3.

Les éléments 2, dits éléments de support, sont des éléments grillagés de profil en « L », possédant chacun une face arrière verticale 4 et une face inférieure horizontale 5. Ces éléments de support 2 sont constitués par des fils métalliques ou en matière plastique entrecroisés et soudés entre eux, de manière à former un quadrillage.

Plus particulièrement, la face arrière verticale 4 d'un élément de support 2 résulte du croisement de fils horizontaux 6 et de fils métalliques verticaux 7, ces derniers étant pliés de manière à se prolonger dans la face inférieure horizontale 5. La transition entre la partie verticale et la partie horizontale d'un tel fil plié est réalisable comme un pan coupé 7a.

La face inférieure horizontale 5 d'un élément de support 2 comporte encore un fil longitudinal 8 formant le bord avant de cette face, et deux autres fils métalliques longitudinaux 9 et 10 relativement rapprochés, situés sensiblement à mi-largeur de cette face.

Les éléments 3, dits éléments de fermeture, sont des éléments grillagés de forme plane et rectangulaire. Prévu pour être disposé verticalement, à l'avant des éléments de support 2, chaque élément de fermeture 3 résulte lui aussi de fils métalliques ou en matière plastique horizontaux 11 et de fils métalliques ou en matière plastique verticaux 12, entrecroisés et soudés entre eux de manière à former un quadrillage.

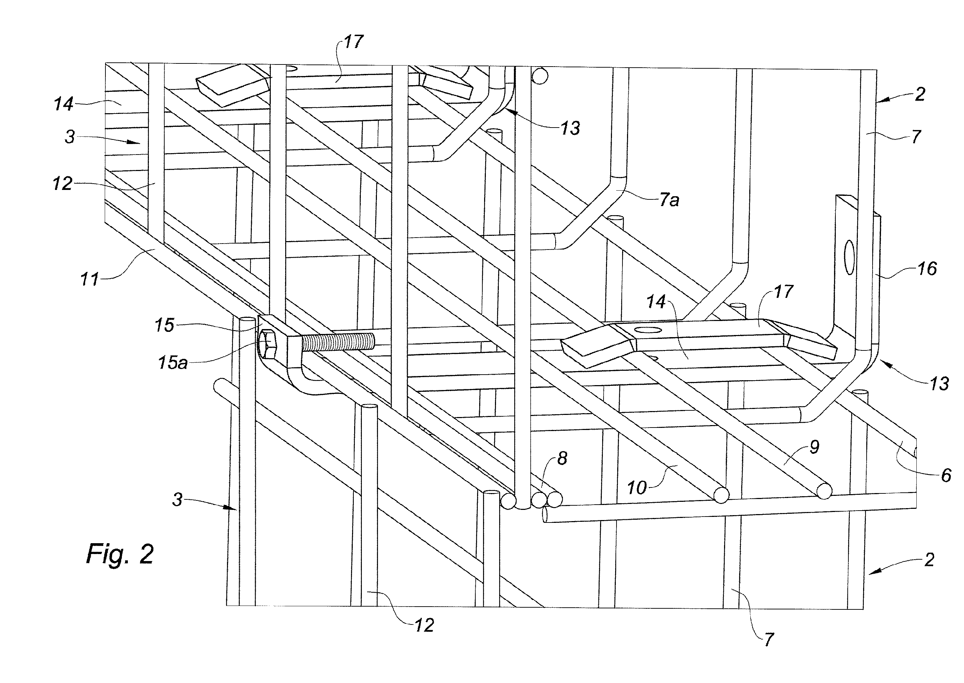

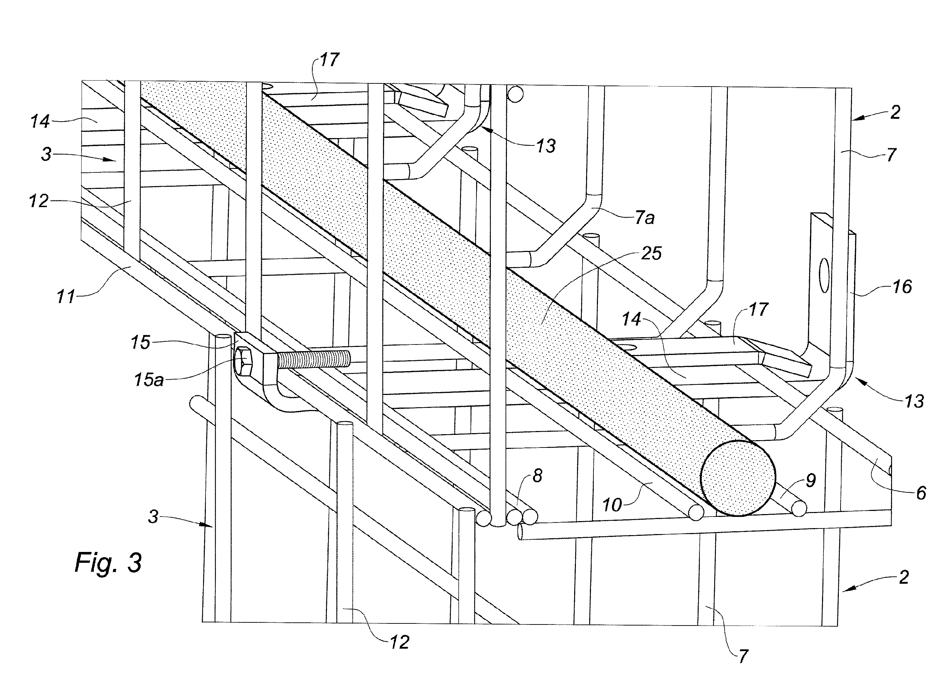

La structure comprend encore des consoles de fixation 13, bien visibles sur les figures 2 et 3, qui servent à lier entre eux les éléments de support 2 et les éléments de fermeture 3, tout en réalisant leur fixation à un mur ou à une paroi (non représenté).

Chaque console de fixation 13, disposée transversalement, possède une partie principale horizontale 14, une partie antérieure 15 repliée vers le haut et une partie postérieure 16 également repliée vers le haut.

La partie principale horizontale 14 de la console de fixation 13 soutient la face inférieure horizontale 5 d'un ou deux éléments de support 2. Elle reçoit une platine de serrage 17 qui pince au moins un fil métallique longitudinal, tel que le fil 9, de la face inférieure horizontale 5 d'un élément de support 2, et qui pince aussi le fil métallique horizontal 6 formant le sommet de la face arrière verticale 4 de l'élément de support 2 immédiatement inférieur.

La partie antérieure 15 de la console de fixation 13 est munie d'un moyen de retenue, tel qu'une vis 15a, par lequel sont retenus les deux fils métalliques horizontaux 11 formant respectivement la base d'un élément de fermeture 3 et le sommet de l'élément de fermeture 3 immédiatement inférieur.

La partie postérieure 16 relativement longue de la console de fixation 13 est perforée et peut ainsi être fixée par une vis ou une cheville (non représentée) à un mur en maçonnerie ou à une paroi de support analogue.

Tous les éléments de support 2 et de fermeture 3 sont ainsi liés entre eux, et ils délimitent alors des volumes parallélépipédiques superposés, prévus pour contenir un substrat de plantation. Aux extrémités de la structure, celle-ci peut être encore délimitée par des éléments de fermeture complémentaires, eux aussi grillagés et de forme plane, tels que l'élément 18 visible sur la droite de la figure 1 . On notera que les pans coupés 7a permettent un certain emboîtement des éléments de support 2 superposés, tout en limitant les ponts thermiques et phoniques entre ces éléments.

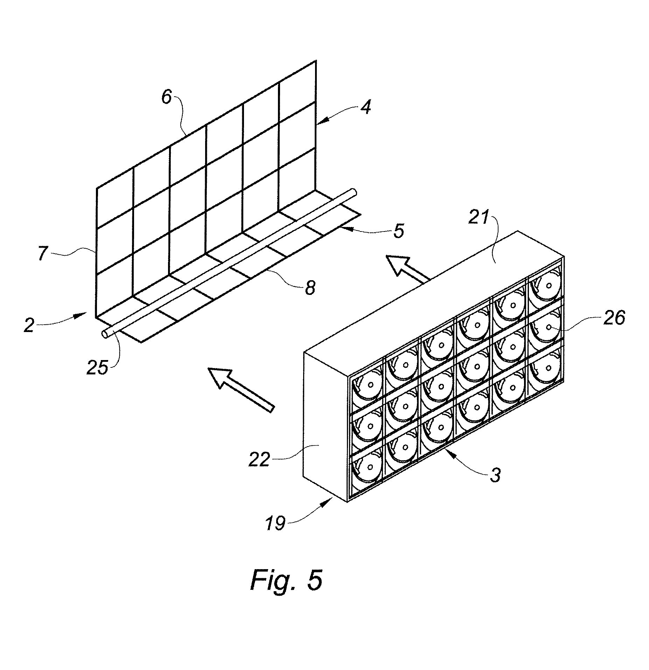

Comme le montrent les figures 5 et suivantes, le substrat de plantation se présente avantageusement sous la forme de cartouches 19 pré-remplies, amenées dans les volumes délimités par les éléments de la structure.

Une cartouche 19, de forme parallélépipédique, possède une face inférieure 20, une face supérieure 21 et deux faces latérales 22 et 23, réalisables en matière plastique ou en carton de préférence biodégradable ou en amidon de maïs et réunies par exemple par clippage. Ces faces encadrent un bloc de substrat de plantation 24 ; elles sont avantageusement poreuses ou perforées, de manière à permettre des échanges d'eau et d'air avec les cartouches 19 adjacentes.

Chaque cartouche 19 peut être constituée et pré-remplie en usine ou en atelier. Elle peut aussi être formée et remplie sur place, au moment de la construction du mur végétalisé.

La construction du mur végétalisé consiste d'abord à monter les consoles de fixation 13, puis à mettre en place les éléments de support 2 en les juxtaposant et en les superposant. Des tuyaux d'irrigation 25 horizontaux sont positionnés sur les faces inférieures horizontales 5 des éléments de support 2, en étant supportés et guidés entre les deux fils métalliques longitudinaux 9 et 10 de ces faces - voir aussi la figure 3.

Les cartouches 19 pré-remplies sont alors posées sur les éléments de support 2, dans les volumes délimités entre les faces inférieures horizontales 5 des éléments de support 2 superposés, ceci avant mise en place et fixation des éléments de fermeture 3 à l'avant des éléments de support 2.

Une coque 26 en matière plastique ou en une autre matière, avec ouvertures pré-percées peut encore prendre place contre la face avant de chaque cartouche 19 pré-remplie, sous un élément de fermeture 3.

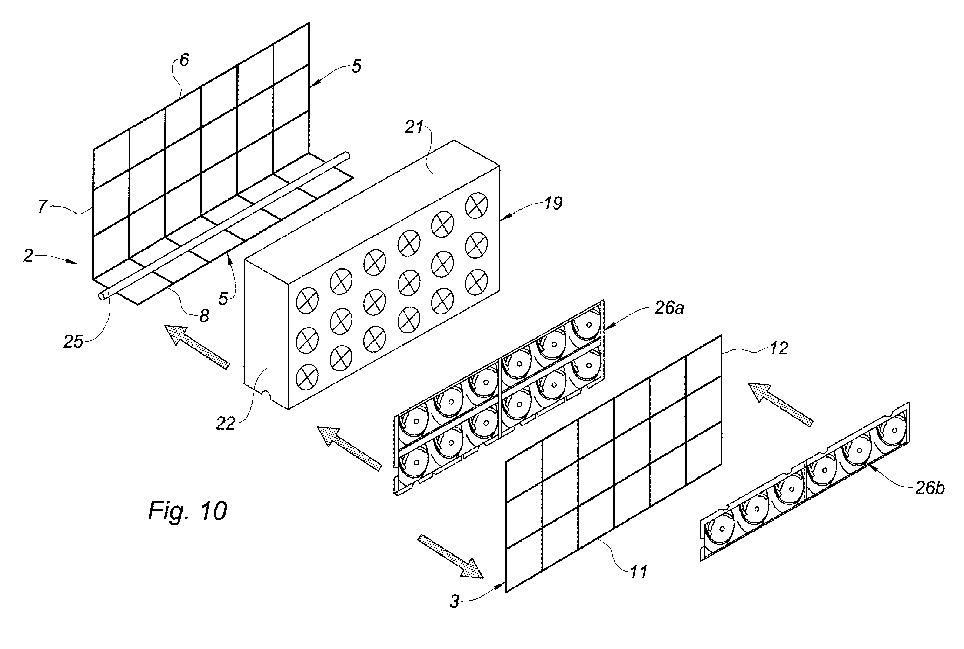

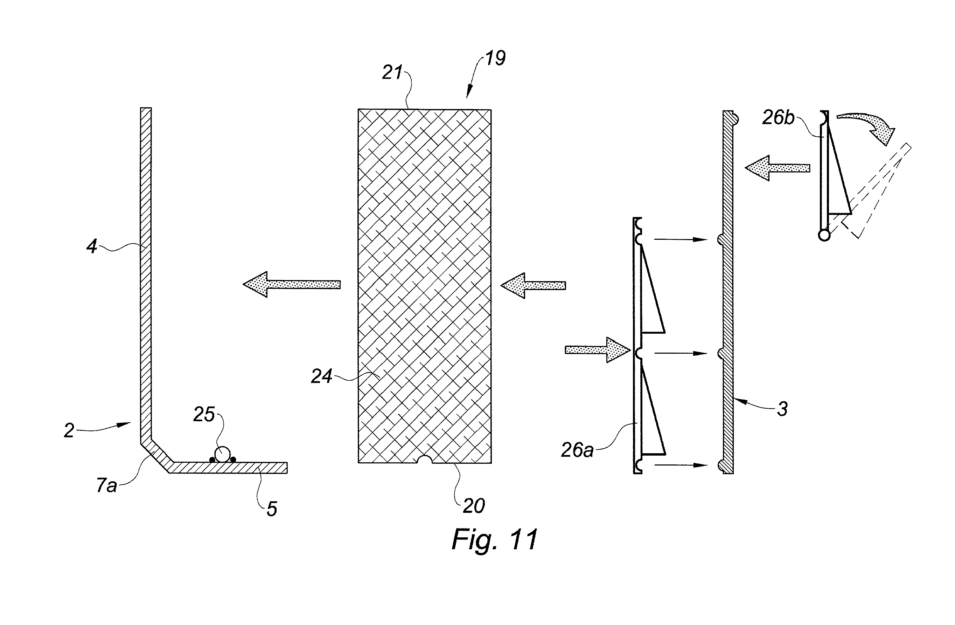

Dans une variante, comme le montrent les figures 10 et 11, la coque est subdivisée en une coque fixe intérieure 26a, et une coque pivotante extérieure 26b. La coque fixe intérieure 26a est retenue au moyen de clips contre l'élément de fermeture 3. La coque pivotante extérieure 26b, articulée autour d'un axe horizontal sur l'élément de fermeture 3, rend la façade du mur végétalisé partiellement ouvrante, en particulier pour permettre le rajout de substrat de plantation ou d'engrais.

Comme il va de soi, l'invention ne se limite pas aux seules formes d'exécution de cette structure de mur végétalisé qui ont été décrites ci-dessus, à titre d'exemples ; elle en embrasse, au contraire, toutes les variantes de réalisation et d'application respectant le même principe.

En particulier, on ne s'écarterait pas du cadre de l'invention par des modifications de détail de ses éléments, ou par le recours à d'autres moyens de liaison et de fixation de ses éléments, ou par l'emploi d'autres matières, ou encore par l'ajout d'accessoires ou aménagements particuliers.

## Revendications

1. Structure de mur végétalisé, composée d'éléments modulaires grillagés, assemblés entre eux en formant des rangées horizontales et/ou des empilements verticaux, tout en délimitant des volumes prévus pour contenir un substrat de plantation, **caractérisée en ce qu'**elle comprend, en combinaison :
- des éléments grillagés de support (2) de profil en « L », avec une face arrière verticale (4) et une face inférieure horizontale (5), ces éléments de support (2) étant juxtaposables et superposables de telle sorte que la face inférieure horizontale (5) d'un élément forme la base d'un volume apte à recevoir un substrat de plantation (24) et simultanément le sommet d'un volume immédiatement inférieur également apte à recevoir un substrat de plantation,
- des éléments grillagés de fermeture (3) de forme plane, également juxtaposables et superposables, prévus pour être disposés verticalement devant le substrat de plantation (24), en reliant les bords avant (8) des faces inférieures horizontales (5) respectives des éléments de support (4) de profil en « L », et
- des moyens de liaison (13) entre les éléments de support (2) de profil en « L », juxtaposés et/ou superposés, ainsi qu'entre les bords avant (8) des faces inférieures horizontales (5) de ces éléments de support (2) de profil en « L » et les bords supérieurs et inférieurs des éléments grillagés verticaux de fermeture (3).

2. Structure de mur végétalisé selon la revendication 1, **caractérisée en ce que** la face inférieure horizontale (5) de chaque élément de support (2) de profil en « L » comporte deux fils longitudinaux (9, 10) relativement rapprochés, situés sensiblement à mi-largeur de cette face, de manière à servir de support et de guide à un tuyau d'irrigation (25) du substrat de plantation (24).

3. Structure de mur végétalisé selon la revendication 1 ou 2, **caractérisée en ce que** la face inférieure horizontale (5) de chaque élément de support (2) de profil en « L » résulte du pliage de fils (7) constitutifs de la face arrière verticale (4) de cet élément de support (2).

4. Structure de mur végétalisé selon la revendication 3, **caractérisée en ce que** la transition entre la partie verticale et la partie horizontale d'un fil plié est réalisée comme un pan coupé (7a).

5. Structure de mur végétalisé selon l'une des revendications 1 à 4, **caractérisée en ce que** les moyens de liaison, reliant les éléments grillagés de support (2) de profil en « L » entre eux et aux éléments grillagés de fermeture, sont constitués par des consoles de fixation (13) transversales, chaque console présentant :
- une partie principale horizontale (14), recevant une platine de serrage (17) apte à pincer au moins un fil métallique longitudinal (9) de la face inférieure horizontale (5) d'un élément de support (2) et un fil métallique longitudinal (6) du sommet de la face arrière verticale (4) de l'élément de support (2) immédiatement inférieur,
- une partie antérieure (15) repliée vers le haut et munie d'un moyen de retenue (15a) de la base d'un élément de fermeture (3) et du sommet de l'élément de fermeture (3) immédiatement inférieur, et
- une partie postérieure (16) repliée vers le haut ou vers le bas et prévue pour être fixée à un mur ou à une paroi de support.

6. Mur végétalisé, **caractérisé en ce qu'il** se compose :
- d'une structure avec éléments grillagés de support (2) de profil en
« L » et d'éléments grillagés de fermeture (3) verticaux, selon l'une des revendications 1 à 5 et
- de cartouches (19) pré-remplies d'un substrat de plantation (24), reçues dans les volumes formés entre les faces inférieures horizontales (5) respectives des éléments de support (2) de profil en « L » superposés, avant mise en place des éléments de fermeture verticaux (3).

7. Mur végétalisé selon la revendication 6, **caractérisé en ce que** chaque cartouche (19) possède au moins une face inférieure (20), une face supérieure (21) et deux faces latérales (22, 23), délimitant un volume parallélépipédique rempli de substrat de plantation (24).

8. Mur végétalisé selon les revendications 7, **caractérisé en ce que** les faces (20 à 23) des cartouches (19) sont réalisées en matière plastique ou en carton biodégradable.

9. Mur végétalisé selon la revendication 6, **caractérisé en ce que** les éléments de fermeture verticaux (3) servent de support à des coques (26, 26a, 26b) disposées du côté intérieur et/ou extérieur de ces éléments, les coques extérieures (26b) pouvant être montées pivotantes sur ledit support.
